# EUROPEAN PATENT APPLICATION

(11) **EP 0 915 121 A1**
(43) Date of publication of application: **12.05.1999**
(21) Application number: 98121023.0
(22) Date of filing: 05.11.1998
(51) Int. Cl.: C08H 5/04, C08B 17/02, B27K 3/02

(54) **Improvements relating to treatment vessels, for example for the acetylation of lignocellulosic materials and methods of treatment**

(30) Priority: 05.11.1997 GB 9723266
(71) Applicant: SOUND PIPE LTD, Grand Turk, Turks and Caicos Islands (TC)
(72) Inventor: Murray, John, Wellingbrough, Northamptonshire NN8 4HB (GB)
(74) Representative: Denmark, James

(57) **Abstract**

The invention concerns the acetlyation of fibrous materials, such as lignocellulose fibres. The fibres in sliver form are wound into narrow rolls so as to have a central aperture. The rolls are then slid onto a central, perforated tube of a cylindrical treatment cage which has an outer cylindrical perforated wall, so that the rolls form a compacted stack of fibres. The cage is placed in a treatment tank, which is then sealed closed.

Acetic anhydride is introduced into the sealed tank and a circulating means then circulates it through the cage and the stack of fibres, thereby to acetylate the fibres. The tank may be heated, and the fibres may be subjected to a pre-acetylation step of having inert gas circulated therethough, and a post-acetylation stripping of residual medium by having steam circulated therethrough, using the same circulating means. An effective method of safely acetylating fibres is achieved.

## Description

This invention relates to treatment vessels for the treatment of in particular fibrous materials, and especially but not exclusively the acetylation of fibrous materials which are lignocellulosic in nature, and to methods of treatment.

This invention the subject of our co-pending International Patent Application No. GB 97/01858 is concerned with the acetylation of lignocellulosic materials of all types including but not limited to jute, hemp, wood fibre, sisal, cotton, coir, wheat straw, hemp, tow, and flax, both seed and straw, and mixtures of same. For simplicity of description, these materials to be treated, which are mainly fibrous, will be referred to hereinafter simply as "the fibres". In the process of the invention of that Application, the fibres may be in loose form or be in the form of a fabric or other structure which may additionally contain felt, or chopped fibre in the form of bales or rope or sliver and bundled or wound on rolls. Acetylation of the fibres is effected where the propensity of the fibres to absorb water is undesirable and it is desired to minimise bio-degradation thereof.

Although the invention the subject of that Application is concerned with a general acetylation process for lignocellulosic materials, it is of particular use on materials in fibrous form which are to be used by being incorporated into sheet or dough composites where the hydrophobic qualities of such fibres are desirable. Such composites may be used in a wide variety of industries, including the moulding of sheets or dough.

It is already widely known that many naturally occurring fibrous materials such as wood, jute, hemp and the like may absorb water, and in many cases, may expand as water is absorbed. Furthermore, it is also known that acetylation of such materials may increase their resistance to water, and depending on the extent of the acetylation process, render them almost totally hydrophobic.

Many methods of acetylation of have been proposed, though as a result of research carried out by us, none, with the exception of the acetylation of cotton to produce rayon has been successfully commercialised, and it is believed that this failure to reach commercialisation has been due to the expense of setting up the necessary plant, and the difficulty of handling the acetylating agent, which is almost exclusively acetic anhydride-a volatile and toxic chemical.

Examples of proposed methods are described in European Patent No. 0213252, International Patent Application No. PCT/GB95/00371, European Patent Application No. 0650998, and International Patent Application No. PCT/SE93/00712. These specifications describe methods of acetylation wherein particular significance is attributed to the means of removal of the excess acetylating agent. For example, in European Patent No. 0213252, the material to be acetylated is placed into a basket which is immersed in an acetylating agent which impregnates the fibres, and the acetylating agent is then drained before other steps in the process are executed.

In International Application No. PCT/GB95/00371, after the fibres have been exposed to the acetylating agent under specified conditions, the fibres are then stripped of most of the remaining acetylating agent and other acetylation reaction products by a hot inert gas.

European Patent Application No. 0650998 discloses the use of a superheated chemical vapour to remove most of the excess acetylating agent and acetylation reaction products.

The acetylating agent common to all processes disclosed in the above patent specifications is acetic anhydride, which has a particularly acrid vapour and is also an expensive chemical, and thus there is a requirement for recovery of the chemical and post-acetylation treatment of the acetylated fibres to remove any acrid vapours therefrom.

One object of the invention of said Application is to provide a simple method and means for the acetylation and treatment of the fibres which will be cost effective, which will lend itself to economic production, and is quick compared to existing acetylation methods.

A further object of the invention of said Application, at least in one aspect, to provide an acetylation process which does not require that the acetylating agent be recovered either prior to or after the acetylation process is undergone.

It is yet a further object of the invention the subject of said Application to simplify the acetylation process and increase the efficiency of the process.

It is an even further object of the invention the subject of said Application to provide a versatile and flexible acetylation system within which a number of different acetylation processes can be effected.

According to the invention the subject of the said Application, there is provided a process for the acetylation of lignocellulosic materials comprising the steps of adding a first reactant, being one of a number of or a mixture of lignocellulosic materials to a containment means, adding a second reactant, being an acetylating agent, to said containment means, characterised in that the amount of the acetylating agent added is sufficient to provide the required degree of acetylation of the lignocellulosic materials without substantial residue of the acetylating agent on completion of the reaction, and in that the reaction is catalysed by the addition of energy to the reactants.

The advantage of the invention of the said Application is that the requirement for additional process steps to remove or recover any residual acetylating agent is thus obviated.

The present invention is a treatment vessel in which, inter alia, the above process can be carried out, and so the use of the vessel and the process provide maximum advantage, but it is to be mentioned that the vessel is one which can be used for any suitable treatment, which includes one in which an excess of acetylating agent may be used when fibres are being acetylated.

According to the present invention there is provided apparatus for the treatment of a material by flowing a fluid treatment medium through or at least in contact with the material, said apparatus comprising a closed treatment tank, a support, such as a cage, within the tank for holding the material to be treated, circulating means in the tank for circulating the treatment medium, the tank, support, and circulating means being arranged so that when the circulating means is operative the medium is forced in a circulating manner through and/or over, the material therein.

The support preferably is in the form of a cage.

Preferably, the tank is a cylindrical vessel, as is the cage and between the cage and the tank inner wall is defined an outer annular passage, whilst the cage has a central passage, the circulating means being arranged to draw the medium from the central passage and force it into the annular passage, from whence it is forced, radially, into the cage, through and or over the material therein, and eventually back into the central passage of the cage.

The circulation means is preferably a circulation blower.

When the treatment is also to include or retain heat, preferably the vessel is provided with an insulation jacket. The tank may be adapted to be heated for example by having a hot oil circulation jacket around it.

The tank although referred to as a closed tank, will be capable of being opened to allow access, and feeding in and out of the treatment medium or mediums.

In the preferred case, the medium to be treated is lignocellulosic fibres, preferably in the sliver state, as supplied from the combers. The slivers may be coiled inside the cage in as dense an arrangement as is required. The slivers may be of hemp, jute flax or the like. The treatment preferably is an acetylation treatment, and the treatment medium is acetic anhydride or acetic acid.

The slivers may be subjected to an pre-treatment such as heating using hot inert gas which is circulated in the same manner as the acetic anhydride. Again, there may be a post treatment involving the circulation of steam, preferably superheated, through the acetylated fibres.

The apparatus enables each of these treatments to be performed easily and independently.

Also, it is to be mentioned that the material which is being treated may be any suitable, and the invention is not to be considered as being limited to the acetylation of fibres, even although this is an important aspect of the invention.

The invention also includes a method of treatment comprising the steps indicated above in any combination as appropriate, and preferably using the apparatus according to the invetion.

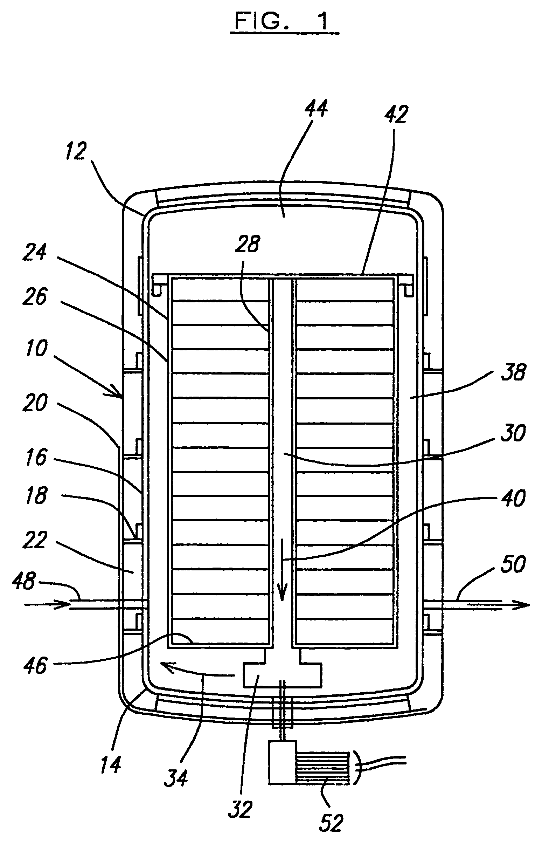

An embodiment of the invention will now be described, by way of example, with reference to the accompanying drawing, of which the single figure shows a treatment tank for the acetylation of fibres of jute or hemp, when in sliver form.

Referring to the drawing, the apparatus comprises a treatment tank 10 which is of cylindrical form, and is provided with a top 12 and a bottom 14 of somewhat hemispherical form, so that the tank is a closed structure. The top 12 can be opened to gain access to the interior, but in use will be sealed to the tank wall.

Exteriorally of the cylindrical wall 16 are stiffening rings 18 and an outer sheath 20 so as to define an oil jacket 22 for the circulation therethrough of hot oil.

Inside the tank is a cylindrical cage 24 having an outer mesh wall 26 and an inner mesh wall 28 so that inside the wall 28 is defined a central passage 30 for the passage of treatment medium as will be explained.

To the bottom end of the passage 30 is a circulation unit 32 which comprises a pump and condenser unit. The pump draws gaseous medium from the passage 30 and circulates it as indicated by arrows 34 to the annular space 38 between the tank wall 16 and the outer wall 26 of the cage. The circulating medium is forced through the wall 26 into the cage in a radial fashion, and emerges from the mesh inner wall 28 into passage 30 and is returned to the pump 32 as indicated by the arrow 40 in passage 30. In an alternative arrangement, the circulation unit 32 is to the top end of the passage 30, and the unit and circulates it in the opposite direction, from that shown.

The top end of the cage is sealed by a solid plate 42, but there are breather holes to allow the top space 44 to equalise pressure with the remainder of the inside of the tank. The lower end of the cage is sealed by a solid plate 46, and the entire cage can be lifted from the tank when the top is opened.

There are inlet and outlet pipes 48 and 50 for introducing the treatment medium gases, which may be, selectively, hot air, acetic anhydride, steam or the like depending upon the material being treated.

In the specific arrangement in which we are interested, the tank is for acetylation of lignocellulosic fibre slivers wound onto disc form and positioned in the cage as shown. The circulating pump 32 which is driven by the motor 52 circulates the acetic anhydride through the cage and the through the material in the cage as described for effecting the treatment. Treatment times and treatment temperatures may be any suitable, and although it is preferable that the correct amount of acetic anhydride to give the required acetylation of the fibres in the cage, is used, this is not strictly necessary.

Hot air or another gas such as an inert gas, may be used to preheat the fibre, or the air or other gas may be introduced and heated when in the tank₃ and equally stripping mediums such as steam may be used for stripping residual gases and other medium from the treated material.

An effective and efficient means is provided for the treatment of material. The tank may typically operate for the acetylation of lignocellulose fibres at 180°C and 2 bar pressure.

## Claims

1. Apparatus for the treatment of a material in a form through which a fluid can flow, by flowing a fluid treatment medium through the material, said apparatus comprising a closed treatment tank (10), and a cage (24), within the tank (10) for holding the material to be treated, characterised by circulating means (32) in the tank (10) for forcing the treatment medium in a circulating manner through the material therein.

2. Apparatus according to claim 1, wherein the tank (10) is a cylindrical vessel, as is the cage (24) and between the cage (24) and the tank inner wall is defined an outer annular passage (38), whilst the cage (24) has a central passage, the circulating means (30) being arranged to force the medium from one of said passages (38, 30) through the material to the other.

3. Apparatus according to claim 2, wherein the circulating means (32) is adapted to circulate the medium from the central passage (30) and deliver it into the annular passage (38), from whence it is forced, radially, into the cage, through and over the material therein, and eventually back into the central passage (30).

4. Apparatus according to claim 1, 2 or 3, wherein the tank has an oil circulation jacket (22) around it whereby hot oil may be circulated around the outside of the tank for the heating thereof.

5. Apparatus according to any preceding claim, wherein there is an insulation jacket around the tank (10).

6. Apparatus according to any preceding claim, wherein the tank (10) is capable of being opened to allow insertion and removal of the cage and the material to be treated.

7. Apparatus according to any preceding claim, wherein the tank (10) has means (48, 50) providing for supply of the treatment medium to the interior of the tank (10).

8. Apparatus according to any preceding claim, wherein the circulation means (32) is a circulation blower inside the tank, driven by an electric or other motor (52) located outside the tank. (10).

9. A method for the treatment of a material in a form through which a fluid can flow, by flowing a fluid treatment medium through the material, said method comprising providing a closed treatment tank (10), and a cage (24), within the tank (10) in which the material to be treated is contained, characterised by forcing treatment medium in the tank (10) in a circulating manner through the material to be treated.

10. A method according to claim 9, wherein the material comprises lignocellulosic fibres and the treatment medium comprises acetic anhydride.

11. A method according to claim 10, wherein the fibres are in sliver from and the slivers are wound into rolls.

12. A method according to claim 11, wherein the sliver rolls are coiled around a central wall (28) of the cage and inside an outer wall (26) of the cage (24) and are stacked in the cage, the treatment medium being circulated through the stack of rolls from one wall (24) to the other (28).

13. A method according to claim 10, 11 or 12, wherein the slivers are taken from hemp, jute or flax.

14. A method according to any of claim 9 to 13, wherein the tank is heated.

15. A method according to claim 14, wherein the tank is heated by hot oil circulation.

16. A method according to any of claims 9 to 15, wherein the material is subjected to a pre-heating by circulating hot inert gas through the material.

17. A method according to any of claims 9 to 16, wherein the material is subjected to a post-treatment by circulating stripping fluid medium through the treated material.
